**Europäisches Patentamt**

**European Patent Office**

**Office européen des brevets**

(19)

(11) Veröffentlichungsnummer : **0 375 680 B1**

(12)

# EUROPÄISCHE PATENTSCHRIFT

(45) Veröffentlichungstag der Patentschrift :
08.04.92 Patentblatt 92/15

(51) Int. Cl.⁵ : **G06K 1/12**

(21) Anmeldenummer : **88902356.0**

(22) Anmeldetag : **19.07.88**

(86) Internationale Anmeldenummer :
**PCT/AT88/00053**

(87) Internationale Veröffentlichungsnummer :
**WO 89/00740 26.01.89 Gazette 89/03**

(54) **WARENBAHNMARKIERUNG MITTELS STREIFENCODE.**

(30) Priorität : **21.07.87 AT 1851/87**

(43) Veröffentlichungstag der Anmeldung :
**04.07.90 Patentblatt 90/27**

(45) Bekanntmachung des Hinweises auf die
Patenterteilung :
**08.04.92 Patentblatt 92/15**

(84) Benannte Vertragsstaaten :
**CH DE FR GB IT LI SE**

(56) Entgegenhaltungen :
**EP-A- 0 170 518**

(56) Entgegenhaltungen :
**EP-A- 0 171 252**
**EP-A- 0 193 334**
**FR-A- 2 184 778**
**FR-A- 2 586 839**
**Patent Abstracts of Japan, Band 8, Nr. 163**
**(P-290)(1600), 27. Juli 1984.**

(73) Patentinhaber : **Österreichisches**
**Forschungszentrum Seibersdorf Ges.m.b.H.**
**Kramergasse 1**
**A-1010 Wien (AT)**

(72) Erfinder : **RIESING, Johann**
**Nemethgasse 1/4/5**
**A-1110 Wien (AT)**

EP 0 375 680 B1

**Beschreibung**

Die Erfindung betrifft ein Verfahren zum Aufbringen von Codes auf vorzugsweise flächige Gegenstände, z.B. textile Bahnen, Folien, Gewebe, Leisten, Fensterrahmen, Profilteile od.dgl., wobei die Codes durch Reflexion von Strahlung (z.B.Licht) an unterschiedlich reflektierenden Flächenbereichen ausgebildet werden sowie eine Anordnung zur Durchführung dieses Verfahrens. Ferner betrifft die Erfindung eine Anordnung zum Lesen von Codes, insbesondere Streifencodes, die auf insbesondere flächige Gegenstände aufgebracht sind, mit einer den Code bestrahlenden elektromagnetischen Strahlenquelle, z.B. ein UV- oder IR-Strahler, eine Lichtquelle od.dgl., einer Empfangsreinrichtung für die reflektierte Strahlung, z.B. Licht, und mit einer Auswerteeinheit.

Es ist bekannt, Waren zu markieren, indem an diesen Streifencodes angebracht werden, diese Streifen beleuchtet werden und die reflektierte Lichtstrahlung ausgewertet wird.

Ferner ist es aus der EP-A 170 518 bekannt, auf einen Trägermaterial eine Fläche von Glasperlen anzuordnen, wobei die Reflexionseigenschaften einiger dieser Glasperlen mittels Laserlicht verändert werden, um einen Code auszubilden.

Ziel der Erfindung ist es, an Gegenständen dauerhafte leicht lesbare Markierung bzw. Codes anzubringen, die im Zuge einer On-Line-Detektierung mittels einer Abtast- bzw. Lesevorrichtung gelesen werden können. Diese Codes können z.B. dazu dienen, die gekennzeichneten Produkte bei ihrer Verarbeitung entsprechenden Verarbeitungsvorgängen oder Lagerstellen zuzuführen; diese Codes sollen dauerhaft ausgeführt, gut lesbar sein, und zuverlässige Signale liefern. Als Gegenstände kommen alle Gegenstände in Frage, die eine Fläche bezitzen, die ausreichend Platz zum Anbringen einer Markierung bietet und die an einer Markierungsanordnung vorbeibewegbar sind; vorzugsweise werden Massenartikel bzw. Fließbandartikel derart markiert.

Dies wird bei einem Verfahren der eingangs gennanten Art dadurch erreicht, daß zur Ausbildung eines Codes, vorzugsweise Streifencodes, unter Zuhilfenahme eines Klebstoffes, z.B. eines thermoplastischen Klebers, eines Zweitkomponentenklebers, einer Kleberlösung, an den Gegenständen Glasperlen mit einem Durchmesser von 0,01 bis 1 mm, vorzugsweise 0,05 bis 0,8 mm, insbesondere 0,08 bis 0,5 mm, und mit einem Brechungsindex von mehr als 1,5, vorzugsweise 1,85 bis 2,0, in Form flächiger Bereiche von bestimmten Abmessungen und vorgegebenen gegenseitigen Abständen angedklebt werden, wozu der Klebstoff unter Verwendung eines die Flächenbereiche des Codes, z.B. Streifencodes, nachgebildeten Maske, aufgespritzt, aufgedruckt bzw. aufgesprüht wird oder in Form der Flächenbereiche des Codes, z.B. Streifencodes, aufgerakelt bzw. ohne Maske mittels Räder, z.B. der Streifenbreite eines Streifencodes entsprechend, aufgerieben oder mittels Stempeln aufgedruckt wird und auf den Kleberauftrag die Glasperlen aufgebracht werden oder wozu die Glasperlen auf einem eine Relativbewegung zum Gegenstand vollführenden Träger angeordnet werden, ein der Form nach der Gesamtbreite des gewünschten Codes entsprechender Bereich bzw. Teil der am Träger befindlichen Glasperlen mit zumindest einer Andrückeinrichtung, z.B. einem Stempel, an den Gegenstand angedrückt und mit einer vom Gegenstand und/oder von den Glasperlen getragenen Kleberschicht am Gegenstand befestigt bzw. gehalten wird.

Die Anordnung zur Durchführung des Verfahrens ist erfindungsgemäß dadurch gekennzeichnet, daß die Anordnung eine Aufbringeeinrichtung für Glasperlen mit einem Durchmesser von 0,01 bis 1 mm, vorzugsweise 0,05 bis 0,8 mm, insbesondere 0,08 bis 0,5 mm, und mit einem Brechtungsindex von mehr als 1,5, vorzugsweise 1,85 bis 2,0, in Form flächiger Bereiche von bestimmten Abmessungen und vorgegebenen gegenseitigen Abständen aufweist, wozu die Anordnung eine Spritzdüse für Klebstoff und eine zwischen der Spritzdüse und dem Gegenstand angeordnete, insbesondere an den Gegenstand anlegbare Maske, z.B. Streifenmaske, umfaßt, in der gegebenenfalls von einer Steuereinrichtung veränderbare bzw. einstellbare Ausnehmungen in Form des gewünschten Codes, z.B. Streifencodes, ausgebildet werden können, oder wozu die Anordnung eine Zufuhreinrichtung für zumindest einen mit Glasperlen versehenen Träger, z.B. ein mit Glasperlen beschichtetes Kunststoffband, umfaßt, an welchem Träger die Glasperlen, z.B. durch Kleben, Warmeinpressen od.dgl., befestigt sind, der Träger eine Relativbewegung zum Gegenstand ausführt, und die dem Träger abgewandte, gegebenenfalls verspiegelte, Seite der Glasperlen mit einer Kleberschicht versehen ist.

Auf diese Weise wird eine einfach aufgebaute Anordnung erstellt, mit der ein gut identifizierbarer und genau lesbarer Code anbringbar ist, der mit einfachen Mitteln aufgebracht werden kann und gut an Gegenständen verschiedenartiger Oberfläche haftet. Insbesondere lange Warenbahnen können mit derartigen Codes an einer oder mehreren Stellen versehen und dann leicht identifiziert werden. Mit der erfindungsgemäßen Anordnung ist es in einfacher Weise möglich, auf einem stehenden oder weiterbewegten Gegenstand einen Code aufzubringen, da die eingesetzten Glaskugeln gut detektierbar sind. Der Brechungsindex und Durchmesser wird vorteilhaft so abgestimmt, daß der Brennpunkt der zur Detektierung des Codes in die glasperlen eingestrahlten Strahlung, insbesondere Licht, innerhalb der Glaskugeln liegt.

Das Aufbringen der Glasperlen ist einfach möglich, wenn der Klebstoff, insbesondere die Klebstoffstreifen, vorzugsweise zur Gänze mit z.B. aufgestreuten oder draufgeblasenen Glasperlen bedeckt wird und die an den Klebstoffstreifen nicht anhaftenden Glasperlen entfernt, z.B. abgesaugt oder weggeblasen werden.

Zweckmäßig ist es dabei, wenn zur Herstellung der Träger auf ein Trägermaterial, z.B. ein Kunstoffband, Glasperlen aufgebracht und z.B. durch Wärmeeinwirkung, Kleber od.dgl. deren befestigt werden, die Glasperlen gegebenenfalls mit Metalldampf beschichtet werden und auf die gegebenenfalls metallbeschichteten Glasperlen eine Kleberschicht aufgebracht wird.

Sinnvoll ist es, wenn die auf den Klebstoff aufgebrachten Glasperlen mit einer Druckwalze od.dgl. angepreßt werden. Als Klebstoffe Können thermoplastische Kleber, Zweikomponentekleber, kaltaushärtende Kleber usw. aufgegratragen werden. Wesentlich ist, daß der Klebstoff sich mit dem Gegenstand und den Glasperlen gut verbindet und eine haltbare Verbindung eingeht.

Das Auftragen des Klebstoffes in Form des Codes, z.B. Streifencodes auf die Gegenstände kann unter Zuhilfenahme einer Maske erfolgen. Entweder ist für jeder aufzutragenden Code eine Maske verhanden und wird für den jeweiligen Fall ausgewählt oder die Maske kann derart aufgebaut sein, daß mit ihr eine Vielzahl von Codes ausgebildet werden kann, indem Maskenteile gegeneinander verschoben oder bewegt werden, um eine dem Code entsprechende Anordnung von Ausnehmungen in der Maske zu bilden. Möglich ist es auch zur Ausbildung eines Streifencodes, mit einer Auftrageinrichtung immer nur einen Streifen auszubilden, die in entsprechenden Abständen auf dem Gegenstand aufgetragen werden. Die Maske könnte ferner mit dem Gegenstand weiterbewegt werden bzw. an der Klebstoffauftragvorrichtung vorbeibewegt werden oder der Gegenstand kann zum Stillstand gebracht werden, die Maske aufgelegt und die Klebstoffauftrageinrichtung relativ zur Maske verfahren werden.

Bei einer Anordnung zum Lesen von Codes, insbesondere Streifencodes, die auf insbesondere flächige Gegenstände aufgebracht sind, mit einer den Code bestrahlenden elektromagnetischen Strahlenquelle, z.B. einem UV- oder IR-Strahler, einer Lichtquelle od.dgl., einer Empfangseinrichtung für die reflektierte Strahlung, z.B. Licht, und mit einer Auswerteeinheit ist erfindungsgemäß vorgesehen, daß die Auswerteeinheit eine Diskriminatorschaltung aufweist, mit der Signale unterdrückbar sind, die zwischen den erwarteten Eintreffzeitpunkten von durch an dem aus Glasperlen aufgebauten Code reflektierter Strahlen, z.B. IR-Strahlung, Licht od.dgl., bedingten Signalen liegen bzw. eine bestimmte Intensität und/oder Zeitdauer nicht erreichen und durch auf der Warenbahn an unerwünschten Stellen gelegenen, d.h. außerhalb von Codebereichen bzw. zwischen Streifen anhaftende, Glasperlen verursacht sind. Mit einer derartigen Einrichtung wird der Signalempfang und die Detektion des Codes in einwandfrei verwertbarer Form sichergestellt.

Insbesondere ist es von Vorteil, daß die Aufbringung von Codes auf die Gegenstände, insbesondere größerer Länge, während der Vorbeibewegung der Gegenstände möglich ist. Sowohl die Aufbringung des Codes als auch das Lesen desselben während des Durchgangs unter dem optischen Sensor der Lesevorrichtung in einzelnen verschiedenen Bearbeitungsvorgängen bzw. Bearbeitungsstufen ist gut möglich; insbesondere kann der momentane Standart einzelner Produktgruppen bestimmt werden und es ist eine zentrale Erfassung und Warenflußsteuerung einfach möglich.

Der Brechungsindex bzw. die Größe und das Material der Glasperlen ermöglichen eine Totalreflexion des vom Lesegerät eingestrahlten Lichtes in die Empfangseinrichtung. Vorteilhaft besitzen die Glasperlen Durchmesser, die einer vorgegebenen Verteilungskurve entsprechen.

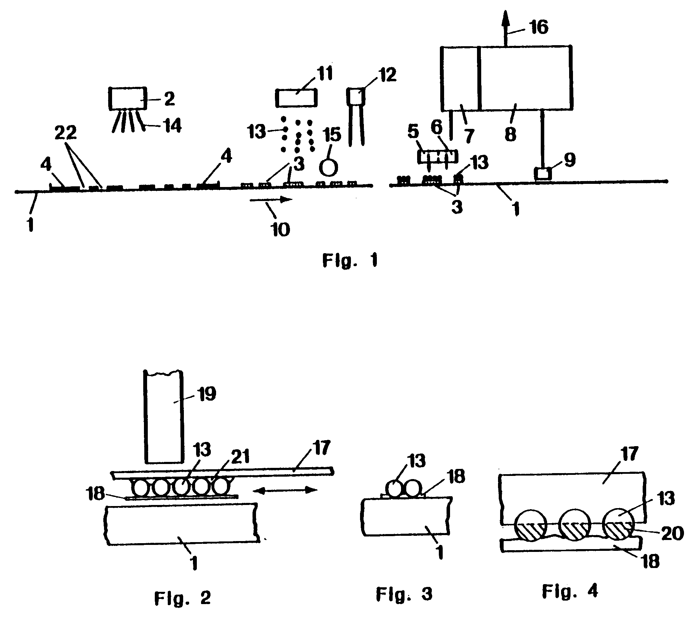

In der folgenden Beschreibung, den Zeichnungen und den Unteransprüchen sind bevorzugte Ausführungsformen der Erfindung beschrieben bzw. dargestellt. Im folgenden wird die Erfindung anhand der Zeichnung beispielsweise näher erläutert. Es zeigen: Fig. 1 einen Schnitt durch ein schematisches Ausführungsbeispiel einer erfindungsgemäßen Anordnung und Fig. 2-4 Detailschnitte von weiteren Ausführungsformen der Erfindung.

Ein Gegenstand, im vorliegenden Fall eine flächige Warenbahn 1 wird gemäß Fig. 1 mit einer aufgelegten Maske 4, in der einem Code, im vorliegenden Fall einem Streifencode, entsprechende Ausnehmungen ausgebildet sind, vor einer Klebstoffauftrageinrichtung 2 vorbeibewegt, welche durch die Ausnehmungen 22 in der Maske 4 Klebstoff 14 auf die Warenbahn 1 aufspritzt. Der Klebstoff 14 trifft nur den Bereich der Maske 4; außerhalb der Maske 4 liegende Bereiche der Warenbahn 1 werden nicht getroffen. Nachdem der Klebstoffauftrag im wesentlichen in Form des Codes durchgeführt wurde, wird die Warenbahn 1 mit dem Klebstoffauftrag 3 an einer Glasperlenabgabevorrichtung 11 vorbeibewegt, mit der Glasperlen 13 aus einem Behälter auf den Klebstoffauftrag geschüttet, geblasen oder gestreut werden. Mittels einer Druckwalze 15 kann ein Festpressen der Glasperlen 13 auf den Klebstoffauftrag 3 erfolgen. Bei Weiterbewegung der Warenbahn 1 in Richtung des Pfeiles 10 kann mit einer Einrichtung 12 ein Abblasen, Absaugen od.dgl.- von vom Klebstoff nicht festgehaltenen Glasperlen 13 erfolgen, sodaß überschüssige Glasperlen beim Lesen des Streifencodes keine Fehlsignale verursachen.

In der Folge ist in der Zeichnung die Detektion des auf der Warenbahn 1 aufgebrachten Codes, z.B. eines Streifencodes gemäß Maske 4, mittels eines Lesegerätes veransrhauliht. Von einem Lichtgeber 5 wird Licht auf die Warenbahn 1 gestrahlt und von den Glasperlen 13 in eine Empfangseinrichtung 6 reflektiert. Die Abstände zwischen den Streifen sind vorzugsweise gleich groß gewählt, die Breite der Streifen beträgt das ein- oder mehrfache einer bestimmten gewählten Streifenbreite. Der Lichtempfänger 6 erhält aufeinanderfolgende Lichtsignale, die über eine Diskriminatorschaltung 7 einer Auswerteeinheit 8 zugeführt werden. Die Diskriminator- bzw. Schwellwertschaltung 7 dient dazu, daß zwischen den einzelnen Streifen liegende Glasperlen 13, welche nicht entfernt wurden und gegebenenfalls Lichtreflexe in den Empfänger 6 leiten, nicht zur Auswerteeinrichtung 8 durchgelassen werden. Die Auswerteeinrichtung 8 kann eine Geschwindigkeitsmeßeinrirhtung 9 zur Messung der Geschwindigkeit der bewegten Warenbahn 1 besitzen, um in Abhängigkeit von der Geschwindigkeit die Aufeinanderfolge bzw. die Abstände der Streifen überprüfen und das zeitrichtige Eintreffen der Signale feststellen zu können. Die Auswerteeinrichtung 8 kann ferner einen Rechner umfassen, welcher allenfalls mit einer zentralen Recheneinheit, zu der eine Leitung 16 geführt ist, in Verbindung stehen kann, welche den gesamten Warenlauf kontrolliert.

Bei der Auswertung kann auch derart vorgegangen werden, daß die aufgrund der von den Glasperlen begrenzten Flächen des Gegenstandes erhaltenen Signale als dem Code entsprechende Signale ausgewertet werden, d.h., daß niht die Lage der Glasperlen den Code bestimmt, sondern die Zwischenräume zwischen den mit Glasperlen beschichteten Stellen. Dabei wird der Codeanfang und das Codeende durch einen Glasperlenstreifen bestimmter Breite markiert. Wenn die Auswerteeinrichtung einen derartigen Streifen erkennt, akzeptiert sie im folgenden das Ausbleiben von Strahlung als Codeinformatiqn und das Eintreffen von Strahlung als Abstand zwischen den Codemarkierungen; die von den dunkel getasteten Stellen erhaltenen Signale stellen somit den Code dar.

Anstelle einer Detektion des Streifencodes mit sichtbarem Licht können auch UV- oder IR-Strahlung und andere elektromagnetisrhe Strahlungen eingesetzt werden. Zur Erhöhung der Reflexion können im Klebstoff Füllstoffe vorgesehen sein, z.B. Al-Filtter, $TiO_2$ od.dgl. aufhellende Pigmente bzw. Materialien.

Bevorzugt ist es, wenn mit einem Metallüberzug, z.B. aus Al, versehene Glaskugeln auf den Klebstoff aufgebracht werden und nach dem Verfestigen des Klebstoffes von den freiliegenden Flächen der Glaskugeln der Metallüberzug entfernt, z.B. weggeätzt wird. Die zwischen den Glaskugeln und dem Klebstoff verbleibenden Metallschichten wirken als Spiegelflächen und ergeben optimale Reflexionsflächen. Das Wegätzen erfolgt bei Textilien bevorzugt während der üblichen Bearbeitungsvorgänge, z.B. Waschen in Laugen, welches den Metallüberzug angreift.

Fig. 2 zeigt eine Anordnung, bei der die Glasperlen 13 von einem Träger 17 getragen werden, der eine Relativbewegung zum Gegenstand 1 ausführt. Die Glasperlen 13 können mit einem Haftmittel 21 am Träger 17 angebracht sein oder wie Fig. 4 zeigt in den Träger 17 eingepreßt sein. Die Glasperlen 13 tragen eine Kleberschicht 18, die allerdings auch vom Gegenstand 1 getragen werden könnte bzw. auf diesen in entsprechender Form aufgebracht wurde. Mit zumindest einem Stempel 19, der der Form nach einem Code oder einem Codeteil entspricht, können Glasperlen 13 an den Gegenstand 1 angedrückt und vom Träger 17 abgelöst werden. Fig. 3 zeigt zweinebeneinanderliegende, der Breite des Stempels 19 entsprechende Reihen von Glasperlen 13, welche z.B. einem Streifen eines Streifencodes entsprechen könnten; im allgemeinen werden mehr als zwei Glasperlenreihen der minimalen Breite eines Streifens entsprechen.

Fig. 4 zeigt einen Schnitt durch einen Träger 17, an dem die Glasperlen 13 durch Eindrücken befestigt sind; der Träger 17 kann ein thermoplastisches Kunststoffband sein, in das erwärmte Glasperlen 13 eingedrückt werden und anhaften. Mit 20 ist eine Verspiegelung der Glasperlen 13 bezeichnet, mit der die am Gegenstand 1 angeklebte Fläche der Glasperlen 13 versehen ist.

Der Kleber 18 kann selbstklebend sein. Ist der Kleber 18 wärmeaushärtend, kann der Stempel 19 beheizbar ausgebildet sein. Est der Kleber 18 UV-aushärtend, so kann die Preßfläche des Klebers durchsichtig und zur Zufuhr von UV-Licht ausgebildet sein. Der Kleber könnte z.B. auch wasserlöslich sein, um an Stoffen im Zuge ihrer Herstellung aufgebrachte Codes leicht entfernen zu können.

Die Einrichtungen zur Bewegung bzw. Zufuhr des Gegenstandes 1 bzw. des Trägers 17 bzw. des Stempels 19 sind nicht dargestellt.

## Patentansprüche

1. Verfahren zum Aufbringen von Codes auf vorzugsweise flächige Gegenstände, z.B. textile Bahnen, Folien, Gewebe, Leisten, Fensterrahmen, Profilteile od.dgl., wobei die Codes durch Reflexion von Strahlung (z.B.Licht) an unterschiedlich reflektierenden Flaüchenbereichen ausgebildet werden, dadurch gekennzeichnet, daß zur Ausbildung eines Codes, vorzugsweise Streifencodes, unter Zuhilfenahme eines Klebstoffes, z.B. eines thermoplastischen Klebers, eine Zweikomponentklebers, einer Kleberlösung, an den Gegenständen Glasperlen mit einem Durchmesser von 0,01 bis 1 mm, vorzugsweise 0,05 bis 0,8 mm, insbesondere 0,08 bis 0,5 mm, und mit einem Brechungsindex von mehr als 1,5, vorzugsweise 1,85 bis 2,0, in Form flächiger Bereiche von bestimmten Abmessungen und vorgegebenen gegenseitigen Abständen angeklebt werden, wozu der Klebstoff unter Verwendung eines die Flächenbereiche des Codes, z.B. Streifencodes, nachgebildeten Maske, aufgespritzt, aufgedruckt bzw. aufgesprüht wird oder in Form der Flächenbereiche des Codes, z.B. Streifencodes, aufgerakelt bzw. ohne Maske mittels Räder, z.B. der Streifenbreite eines Streifencodes entsprechend, aufgerieben oder mittels Stempeln aufgedruckt wird und auf den Kleberauftrag die Glasperlen aufgebracht werden oder wozu die Glasperlen auf einem eine Relativbewegung zum Gegenstand vollgührenden Träger angeordnet werden, und ein, der Form nach der Gesamtbreite des gewünschten Codes entsprechender Bereich bzw. Teil der am Träger befindlichen Glasperlen mit zumindest einer Andrückeinrichtung, z.B. einem Stempel, an den Gegenstand angedrückt und mit einer vom Gegenstand und/oder von den Glasperlen getragenen Kleberschicht am Gegenstand befestigt bzw. gehalten wird.

2. Verfahren nach Anspruch 1, dadurch gekennzeichnet, daß der Klebstoff, insbesondere die Klebstoffstreifen, vorzugsweise zur Gänze mit z.B. aufgestreuten oder draufgeblasenen Glasperlen bedeckt wird und daß die an den Klebstoffstreifen nicht anhaftenden Glasperlen entfernt, z.B. abgesaugt oder weggeblasen, werden.

3. Verfahren nach Anspruch 1 oder 2, dadurch gekennzeichnet, daß die Glasperlen an den Klebstoff angepreßt werden.

4. Verfahren nach einem der Ansprüche 1 oder 2, dadurch gekennzeichnet, daß mit einem Metallüberzug oder Metalloxid, z.b. aus Al, versehene Glaskugeln auf den Kleber aufgebracht werden und daß nach dem Verfestigen des Klebstoffes von den freiliegenden Flächen der Glaskugeln der Metall überzug entfernt, z.B. weggeätzt, wird.

5. Verfahren nach Anspruch 1, dadurch gekennzeichnet, daß die dem Träger abgewandte Seite der Glasperlen mit einer, z.B. mit UV-Licht aushärtbaren, einer selbstklebenden, einer wärmehärtenden od.dgl., Kleberschicht versehen ist.

6. Verfahren nach Anspruch 1 oder 6, dadurch gekennzeichnet, daß zur Herstellung der Träger auf ein Trägematerial, z.B. ein Kunststoffband, Glasperlen aufgebracht und z.B. durch Wärmeeinwirkung, Kleber od.dgl., befestigt werden, daß die Glasperlen gegebenenfalls mit Metalldampf beschichtet werden und daß auf die gegebenenfalls metallbeschichteten Glasperlen eine Kleberschicht aufgebracht wird.

7. Anordnung zum Aufbringen eines Codes auf vorzugsweise flächige Gegenstände, z.B. textile Bahnen, Gewebe, Gewirke, Folien, Leisten, Profilteile, Fensterrahmen od.dgl., wobei die Codes durch Reflexion von Strahlung (z.B.Licht) an unterschiedlicht reflektierenden Flächenbereichen ausgebildet sind, insbesondere zur Duchführung des Verfahrens nach einem der Ansprüche 1 bis 6, dadurch gekennzeichnet, daß die Anordnung eine Aufbringeeinrichtung für Glasperlen mit einem Durchmesser von 0,01 bis 1 mm, vorzugsweise 0,05 bis 0,8 mm, insbesondere 0,08 bis 0,5 mm, und mit einem Srechungsindex von mehr als 1,5, vorzugsweise 1,85 bis 2,0, in Form flächiger Bereiche von bestimmten Abmessungen und vorgegebenen gegenseitigen Abständen aufweist, wozu die Anordnung eine Spritzdüse für Klebstoff (14) und eine zwischen der Spritsdüse und dem Gegenstand (1) angeordnete, insbesondere an den Gegenstand anlegbare Maske, z.B. Streifenmaske (4), umfaßt, in der gegebenenfalls von einer Steuereintichtung veränderbare bzw. einstellbare Ausnehmungen in Form des gewünschten Codes, z.B. Streifencodes, ausgebildet werden können, oder wozu die Anordnung eine Zufuhreinrichtung für zumindest einen mit Glasperlen (13) versehenen Träger (17), z.B. ein mit Glasperlen beschichtetes Kunststoffband, umfaßt, an welchem Träger (17) die Glasperlen (13), z.B. durch Kleben, Warmeinpressen od.dgl., befestigt sind, der Träger (17) eine Relativbewegung zum Gegenstand (1) ausführt, und die dem Träger (17) abgewandte, gegebenenfalls verspiegelte, Seite der Glasperlen (13) mit einer Kleberschicht (18) versehen ist.

8. Anordnung nach Anspruch 7, dadurch gekennzeichnet, daß eine Blasbzw. Schüttvorrichtung (11) für Glasperlen (13) vorgesehen ist, mit der die Glasperlen (13) über den Klebstoffauftrag, z.B. die Klebstoffstreifen, verteilbar sind und daß gegebenenfalls Einrichtungen (12) zum Entfernen überschüssiger Glasperlen, z.B. Blas- oder Saugvorrichtungen, vorgesehen sind.

9. Anordnung nach Anspruch 7 oder 8, dadurch gekennzeichnet, daß zum Anpressen der Glasperlen eine Druckwalze (15), ein der Gesamtbreite der Form des Codes entsprechender Druckstempel (19) od.dgl. vorgesehen ist.

10. Anordnung nach einem der Ansprüche 7 bis 9, dadurch gekennzeichnet, daß der Anpreßstempel (19) mit einer Heizeinrichtung oder einem UV-Strahler kombiniert ist, mit denen nach Anpressen der Glasperlen (13) und der von diesen getragenen Kleberschicht am Gegenstand (1) die Klebeschicht (8) aushärtbar ist.

11. Anordnung nach einem der Ansprüche 7 bis 10, dadurch gekennzeichnet, daß die Glasperlen (13) auf dem Träger (17) in Form einer einlagigen Schicht angeordnet sind.

12. Anordnung nach einem der Ansprüche 7 bis 11, dadurch gekennzeichnet, daß die dem Träger abgewandte Seite der Glasperlen, z.B. mit einem Metallüberzug, verspiegelt sind.

13. Anordnung zum Lesen von Codes, insbesondere Streifencodes, die auf insbesondere flächige Gegestände aufgebracht sind, mit einer den Code bestrahlenden elektromagnetischen Strahlenquelle, z.B. ein UV- oder IR-Strahler, eine Lichtquelle od.dgl., einer Empfangseinrichtung für die reflektierte Strahlung, z.B. Licht, und mit einer Auswerteeinheit zur Durchführung des Verfahrens nach einem der Ansprüche 1 bis 6 bzw. in Verbindung mit einer Anordnung nach einem der Ansprüche 7 bis 12, dadurch gekennzeichnet, daß die Auswerteeinheit (8) eine Diskriminatoschaltung (7) aufweist, mit der Signale unterdrückbar sind, die zwischen den erwarteten Eintreffzeitpunkten von duch die an dem aus Glasperlen (13) aufgebauten Code (3) reflektierte Strahlung, z.B. IR-Strahlung, Licht od.dgl., bedingten Signalen liegen bzw. eine bestimmte Intensität und/oder Zeitdauer nicht erreichen und durch auf der Warenbahn (1) an unerwünschten Stellen gelegene, d.h. außerhalb von Codebereichen bzw. zwischen Streifen anhaftende, Glasperlen (13) verursacht sind.

14. Anordnung nach Anspruch 13, dadurch gekennzeichnet, daß von der Auswerteeinheit als Codeinformation das Ausbleiben von reflektierter Strahlung zwischen zwei von Glasperlen gebildeten Reflexmarken erkannt wird.

## Claims

1. A process for applying codes onto preferably tabular objects, for instance textile webs, sheets, fabrics, ledges, strips, window frames, profile components or the like, the codes being formed by the reflexion of radiation (for instance light) on differently reflecting surface areas, characterized in that for forming a code, preferably a bar code, with the aid of an adhesive, for instance a thermoplastic adhesive, a two-component adhesive, an adhesive solution, glass beads of a diameter of 0.01 to 1 mm, preferably of 0.05 to 0.5 mm, in particular of 0.08 to 0.5 mm, and of a refractive index of more than 1.5, preferably of 1.85 to 2.0, are adhered to the objects in the form of tabular areas of definite dimensions and predetermined mutal distances, wherefor the adhesive is injected, pressed or sprayed on with use of a mask simulating the surface areas of the code, for instance bar code, or roughened in the form of the surface areas of the code, for instance bar code, by means of a doctor blade, or ground, for instance corresponding to the bar width of a bar code, by means of wheels without using a mask, or pressed on by means of dies, or wherefor the glass beads are placed onto a support carrying out a relative movement in respect of the object, and an area or portion of the glass beads present on the support corresponding to the form of the total width of the desired code is pressed onto the object by means of at least one contact pressure means, for instance a die, and attached or held to the object by means of an adhesive layer carried by the object and/or the glass beads.

2. The process according to claim 1, wherein the adhesive, in particular the strips of adhesive, is (are) preferably entirely covered by glass beads scattered or blown on and the glass beads not adhering to the strips of adhesive are removed, for instance sucked off or blown off.

3. The process according to claim 1 or 2, wherein the glass beads are pressed onto the adhesive.

4. The process according to claim 1 or 2, wherein glass beads provided with a metal coating or metal oxide, for instance of Al, are applied onto the adhesive and the metal coating is removed, for instance etched off, from the exposed surfaces of the glass beads after setting of the adhesive.

5. The process according to claim 1, wherein the side of the glass beads facing away from the support is provided with an adhesive layer which is self-adhesive, curable by means of ultraviolet light, thermosetting or the like.

6. The process according to claim 1 or claim 6, wherein for producing the supports, glass beads are applied to a support material, for instance a plastics material belt and attached thereon by means of, for instance, the effect of heat, an adhesive or the like, the glass beads are optionally coated by means of metal vapor and a coating of adhesive is applied to the optionally metal-coated glass beads.

7. A structure for applying a code onto preferably tabular objects, for instance webs of textiles, woven and knit fabrics, sheets, strips, ledges, profile components, window frames or the like, the codes being formed by the reflexion of radiation (for instance light) on differently reflecting surface areas, in particular for carrying out the process according to any one of the claims 1 to 6, characterized in that the structure is provided with an application means for glass beads with a diameter of from 0.01 to 1 mm, preferably 0.05 to 0.8 mm, in particular 0.08 to 0.5 mm, and a refractive index of more than 1.5, preferably 1.85 to 2.0, in the form of surface areas of definite dimensions and predetermined mutual distances, wherefor the structure comprises an injection nozzle for adhesive (14) and a mask, for instance a bar mask (4), applicable between the injection nozzle and the object (1), in particular applicable onto the object, in which recesses in the form of the desired code, for instance bar code, optionally changeable or adjustable by a control means, can be formed, or wherefor the structure comprises a feeding means for at least one support (17) provided with glass beads (13), for instance a plastics material belt coated with glass beads, on which support (17) the glass beads (13) are attached, for instance by means of adhesive, contact pressure with heat or the like, the support (17) carries out a relative movement towards the object (1) and the optionally specularly reflective side of the glass beads (13) facing away from the support (17) is provided with a coating of adhesive (18).

8. The structure according to claim 7, wherein a blowing or dumping device (11) for glass beads (13) by means of which the glass beads (13) are distributable over the applied adhesive, for instance the adhesive strips, is provided and if required , means (12) for removing excess glass beads, for instance blowing or suction means, are provided.

9. The structure according to claim 7 or 8, wherein a compression roller (15),a pressure piston (18) corresponding to the total width of the form of the code or the like is provided for subjecting the glass beads to contact pressure.

10. The structure according to any one of the claims 7 to 9, wherein the pressure piston (18) is combined with a heating means or an ultraviolet radiation source by means of which the adhesive coating (8) is curable subsequent to pressing the glass beads (13) and the adhesive coating carried by them onto the object (1).

11. The structure according to any one of the claims 7 to 10, wherein the glass beads (13) are arranged on the support (17) in the form of a monolayer coating.

12. The structure according to any one of the claims 7 to 11, wherein the side of the glass beads facing away from the support is made specularly reflective, for instance by means of a metal coating.

13. A structure for reading codes, in particular bar codes applied to in particular tabular objects, with an electromagnetic radiation source, for instance an ultraviolet or infrared radiation source, a light source or the like irradiating the code, a receiving means for the reflected radiation, for instance light, and with an evaluation unit for carrying out the process according to any one of the claims 1 to 6 or in connection with a structure according to any one of the claims 7 to 12, characterized in that the evaluation unit (8) is provided with a discriminator circuit (7) by means of which signals arriving between the expected arrival times of signals generated by the radiation, for instance infrared radiation, light or the like, reflected by the code (3) composed of glass beads (13), and/or signals which do no attain a definite intensity and/or duration and are caused by glass beads (13) positioned on the object (1) in undesirable locations, i.e. adhering outside of the code area or between bars, are suppressable.

14. The structure according to claim 13, wherein the absence of reflected radiation between two reflexion marks formed by glass beads is recognized as code information by the evaluation unit.

## Revendications

1. Procédé de marquage d'objets avantageusement bidimensionnels, tels que nappes textiles, tissus, films ou feuilles, ou d'objets tels que lattes, cadres de fenêtres, profilés, ou autres, à l'aide de codes rendus apparents par réflexion d'un rayonnement (p.ex. lumineux) sur des zones de la surface de pouvoir réfléchissant différent, caractérisé en ce que pour réaliser un code, avantageusement un code à barres, des perles de verre d'un diamètre de 0,01 à 1 mm, avantageusement 0,05 à 0,8 mm et en particulier 0,08 à 0,5 mm de diamètre, présentant un indice de réfraction supérieur à 1,5, avantageusement de 1,85 à 2,0, sont appliquées sur les objets sous forme de zones de surfaces de dimensions déterminées, espacées les unes des autres selon des intervalles donnés, et sont collées à l'aide d'un adhésif, qui peut être par exemple une colle thermoplastique, une colle à deux composants ou une solution de colle, l'adhésif pouvant être appliqué par jet, par impression ou par pulvérisation en utilisant un masque qui reproduit les zones de surface du code, notamment du code à barres, ou bien être appliqué à la raclette selon la forme des zones de surface du code, notamment du codes à barres, ou encore être appliqué sans masque, par report au moyen de roues ayant par exemple la largeur des barres d'un code à barre, ou au moyen d'outils tels qu'une étampe, les perles de verre étant alors déposées sur la couche de colle ou bien étant disposées sur un support qui décrit un mouvement relatif par rapport à l'objet et une zone ou partie des perles de verre qui se trouvent sur le support, de forme correspondante à la largeur totale du code souhaité, étant pressée sur l'objet au moyen d'au moins un dispositif presseur tel qu'une étampe, et fixée ou assujettie à l'objet à l'aide d'une couche d'adhésif appliquée sur l'objet e/ou sur les perles de verre.

2. Procédé selon la revendication 1, caractérisé en ce que l'adhésif, en particulier l'ensemble des barres formées par l'adhésif, est avantageusement recouvert entièrement de perles répandues par gravité ou par soufflage, les perles qui n'ont pas adhéré à l'adhésif étant éliminées, par exemple aspirées ou balayées par soufflage.

3. Procédé selon la revendication 1 ou 2, caractérisé en ce que les perles de verre sont pressées sur l'adhésif.

4. Procédé selon une des revendications 1 ou 2, caractérisé en ce que les perles déposées sur l'adhésif sont revêtues d'une couche de métal ou d'oxyde métallique, p.ex. d'aluminium et que, une fois l'adhésif durci, les surfaces à découvert des perles de verre sont débarassées du métal, p.ex. par mordançage.

5. Procédé selon la revendication 1, caractérisé en ce que le côté des perles de verre opposé au support est revêtu d'une couche d'adhésif qui peut être par exemple un adhésif durcissant aux rayons ultraviolets, ou autocollant, ou thermodurcissable, ou autre.

6. Procédé selon la revendication 1 ou 6, caractérisé en ce que, pour la confection des supports, des perles de verre sont déposées sur un substrat, p.ex. une bande de matière synthétique, et sont fixées par exemple sous l'action de la chaleur, ou à l'aide d'un adhésif ou d'une autre manière, les perles de verre étant le cas échéant revêtues de métal vaporisé et une couche d'adhésif étant appliquée sur les perles de verre qui ont été le cas échéant métallisées.

7. Dispositif pour le marquage d'objets avantageusement bidimensionnels, tels que nappes textiles, tissus, maille, films ou feuilles, ou d'objets tels que lattes, cadres de fenêtres, profilés, ou autres, à l'aide de codes rendus apparents par réflexion d'un rayonnement (p.ex. lumineux) sur des zones de la surface de pouvoir réfléchissant différent, en particulier pour la mise en oeuvre du procédé selon une des revendications 1 à 5, caractérisé en ce que le dispositif comporte un système d'application de perles de verre d'un diamètre de 0,01 à 1 mm, avantageusement 0,05 à 0,8 mm et en particulier 0,08 à 0,5 mm de diamètre, présentant un indice de réfraction supérieur à 1,5, avantageusement de 1,85 à 2,0, sous forme de zones de surfaces de dimensions déterminées, placées à intervalles donnés les unes des autres, ledit dispositif comportant soit une buse pour adhésif (14) et un masque, par exemple un masque à barres, disposé entre la buse et l'objet (1), et pouvant avantageusement être appliqué sur l'objet, dans lequel ont été pratiqués des évidements ayant la forme du code désiré, notamment du code à barres, modifiables ou réglables le cas échéant à l'aide d'un dispositif de commande, soit un système d'amenée pour au moins un support (17) auquel sont fixées les perles de verre (13), p.ex. une bande de matière synthétique recouverte de perles de verre, les perles de verre (13) étant fixées à ce support (17) au moyen d'un adhésif, ou par pressage à chaud, ou par toute autre méthode, le support (17) décrivant un mouvement relatif par rapport à l'objet (1) et le côté des perles de verre opposé au support (17), qui a été le cas échéant métallisé, étant recouvert d'une couche d'adhésif (18).

8. Procédé selon la revendication 7, caractérisé en ce qu'il est prévu un dispositif (11) permettant de répandre les perles (13), tombant par gravité ou entraînées par l'air soufflé, sur la couche d'adhésif, p.ex. les barres formées par l'adhésif et, le cas échéant, des dispositifs (12) permettant d'éliminer les perles de verre en excédent, p.ex. par soufflage ou par aspiration.

9. Procédé selon une des revendications 7 ou 8, caractérisé en ce qu'il est prévu un cylindre de pression (15), un outil presseur tel qu'une étampe (19) correspondant à la largeur totale du code ou tout autre système, pour appliquer les perles de verre par pression sur la couche d'adhésif.

10. Procédé selon une des revendications 7 à 9, caractérisé en ce que l'outil presseur, p.ex. une étampe (19) est combiné avec un dispositif de chauffage ou un radiateur à rayons ultraviolets permettant de durcir la couche d'adhésif (8) une fois les perles de verre (13) et la couche d'adhésif qu'elles portent pressées sur l'objet (1).

11. Procédé selon une des revendications 7 à 10, caractérisé en ce que les perles de verre (13) sont disposées en une seule couche sur le support ( 17).

12. Procédé selon une des revendications 7 à 11, caractérisé en ce qu'une couche réfléchissante, p.ex. un couche métallique, est déposée sur la face des perles de verre opposée au support.

13. Dispositif pour la lecture de codes, en particulier de codes à barres, marqués sur des objets de préférence bidimensionnels, à l'aide d'une source de rayonnement électromagnétique dirigé sur le code, p.ex. un radiateur à rayons ultraviolets ou infrarouges, une source lumineuse ou autre, d'un dispositif de réception des rayons réfléchis, p.ex. de la lumière, et d'une unité d'évaluation pour la réalisation du procédé selon une des revendications 1 à 6 ou en liaison avec un dispositif selon une des revendications 7 à 12, caractérisé en ce que l'unité d'évaluation (8) comporte un étage de discrimination (7) permettant d'éliminer les signaux apparaissant entre les instants prévus d'arrivée des signaux provenant du rayonnement, p.ex. rayons infrarouges, lumière ou autre, réfléchi par le code (3) formé de perles de verre (13), ou bien n'atteignant pas une intensité et/ou une durée déterminées et provoqués par des perles de verre (13) qui se trouvent à un endroit imprévu de l'objet (1), autrement dit en dehors de la zone du code ou entre les barres.

14. Dispositif selon la revendication 13, caractérisé en ce que l'information de code reconnue par l'unité d'évaluation est l'absence de réflexion du rayonnement entre deux marques réfléchissantes formées par des perles de verre.

Fig. 1

Fig. 2

Fig. 3

Fig. 4